# EUROPEAN PATENT SPECIFICATION

(11) **EP 3 022 964 B1**
(45) Date of publication and mention of the grant of the patent: **06.05.2020**
(21) Application number: 14739417.5
(22) Date of filing: 14.07.2014
(51) Int. Cl.: H04W 28/24, H04W 4/08, H04W 4/70, H04W 76/40

(54) **METHOD AND ENTITY FOR PERFORMING A GROUP CONTROL FUNCTION**
VERFAHREN UND EINHEIT ZUR DURCHFÜHRUNG EINER GRUPPENSTEUERUNGSFUNKTION
PROCÉDÉ ET ENTITÉ POUR RÉALISER UNE FONCTION DE COMMANDE DE GROUPE

(30) Priority: 15.07.2013 EP 13176425
(43) Date of publication of application: 25.05.2016
(73) Proprietor: Koninklijke KPN N.V., 3072 AP Rotterdam (NL); Nederlandse Organisatie voor toegepast- natuurwetenschappelijk onderzoek TNO, 2595 DA 's-Gravenhage (NL)
(72) Inventor: BUSROPAN, Bryan Jerrel, NL-2492 MR Den Haag (NL); NORP, Antonius, NL-2584 EN The Hague (NL)
(74) Representative: Wuyts, Koenraad Maria
(86) International application number: PCT/EP2014/064998
(87) International publication number: WO 2015/007665

(56) References cited:
- EP-A1- 2 563 070
- WO-A1-2011/006889
- US-A1- 2013 051 228
- NEC: "Solution for group policy control", 3GPP DRAFT; S2-124480, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. New Orleans, USA; 20121112 - 20121116 6 November 2012 (2012-11-06), XP050684127, Retrieved from the Internet: URL:http://www.3gpp.org/ftp/tsg_sa/WG2_Arc h/TSGS2_94_New_Orleans/Docs/ [retrieved on 2012-11-06]
- HUAWEI ET AL: "Enforcing group level policy", 3GPP DRAFT; S2-124308_ENFORCING GROUP LEVEL POLICY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. New Orleans, USA; 20121112 - 20121116 6 November 2012 (2012-11-06), XP050683975, Retrieved from the Internet: URL:http://www.3gpp.org/ftp/tsg_sa/WG2_Arc h/TSGS2_94_New_Orleans/Docs/ [retrieved on 2012-11-06]
- JUNIPER NETWORKS: "Solution for Group based Charging/policing/addressing", 3GPP DRAFT; S2-122305_GROUP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto, Japan; 20120521 - 20120525, 15 May 2012 (2012-05-15), XP050632808,
- ITRI: "Resource sharing solution for MTC Groups", 3GPP DRAFT; S2-103106, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20100706, 29 June 2010 (2010-06-29), XP050458194,

## Description

### FIELD OF THE INVENTION

The invention relates to a method and entity for performing a group control function. In particular, the invention relates to a method and entity for performing a group control function for a group of devices in a telecommunications network, the group control function being associated with at least one group connection value condition defined for the group of devices.

### BACKGROUND

The application of Machine-type communication (MTC), also known as Machine-to-machine (M2M) communication, may involve hundreds, thousands or millions of communication modules which each act as a communication terminal to the telecommunication network. A common characteristic of M2M applications is that much of the communication occurs without being related directly to the communication needs of a human operating the device (such as e.g. person making a telephone call or a person browsing a web site). An example of M2M communication involves the electronic reading of e.g. 'smart' electricity meters at the homes of a large customer base over the telecommunications network from a server connected to the further network.

Other examples of M2M devices include sensors, meters, vending or coffee machines etc. that can be equipped with communication modules that allow reporting status information to a data processing centre over the telecommunications network. Such devices may also be monitored by the server. The data processing centre may e.g. store the data and/or provide a schedule for maintenance people to repair or refill a machine, meter, sensor etc. Yet other examples of M2M communication include the communication by navigation devices (e.g. a car navigation device), where a device receives information such as maps or map updates, traffic information, ad/or where a device transmits information such as location, direction, speed, etc. Further, also some forms of communication via a human-related device, such as a smartphone, may be categorised as M2M communication, e.g. when checking for new e-mails and/or when retrieving or sending e-mail or other information without direct human intervention.

MTC is currently being standardized in 3GPP TS 22.368. In the pending version of 3GPP TS 22.368, group based MTC features are proposed that apply to groups of devices. MTC features are defined as network functions to optimise the network for use by M2M applications. Groups of devices are defined as devices that share one or more MTC features and that belong to the same MTC subscriber. An MTC subscriber is defined as a legal entity having a contractual relationship with a network operator to provide service to one or more of the MTC devices. An example of an MTC subscriber could be a utility company using 'smart' meters.

For a group of devices, policies may be defined that need to be applied for such a group of devices. An MTC subscriber may e.g. have ten million devices, while the contract with the network operator allows for a maximum of ten thousand co-existing connections (PDP contexts) at any time. The network operator may want to control (i.e. monitor and/or enforce) that the MTC subscriber complies with the contract to e.g. avoid peak load or to control contractual terms. Another example of a group-based MTC feature for which a policy can be controlled may relate to the aggregated maximum bit rate for the connections established by an MTC group or may relate to the aggregate bit rate for the data that is sent/received by a MTC group. Yet other examples of a group-based MTC policy relates to an area, such as a geographical or an area defined otherwise (e.g. defined by a group of base stations or other network nodes such as SGSN(s), GGSN(s), MME(s) or P-GW(s) serving the device). Such a policy may define, for example, that the MTC devices belonging to a particular group are allowed to only connect to or use a service when located in a particular area. Or, reversely, such a policy may define (assign) a device to an MTC group in dependence of the area the device is currently located in or was located in when attaching to the network or when establishing a PDP context.

The devices of the MTC subscriber may be located in or roam through a large area in which the MTC subscriber provides a service. The devices in the area may be served by separate network nodes, e.g. separate Gateway GPRS Support Nodes (GGSNs) for 2.5G and 3G telecommunications networks or separate Packet Gateways (P-GWs) for LTE telecommunications networks. Network operators may also apply separate network nodes to enable load sharing.

NEC "Solution for group policy control", 3GPP draft; S2-124480, 3rd Generation Partnership Project (3GPP), Mobile Competence Centre ; 650; Route des Lucioles ; F-06921 Sophia-Antipolis Cedex ; France, SA WG2, New Orleans, USA; 20121112 - 20121116 6 November 2012 (2012-11-06), (http://www.3gpp.org/ftp/tsg_sa/WG2_Arch/TSG2_94_New_Orleans/Docs) proposes a solution that the MTC UE is subject to group based policy control as soon as it establishes the PDN connection to an APN enabled for the group feature. For that purpose, the MME receives a Group ID as the subscriber information when downloaded from the HSS and includes this Group ID in the Create Session Request message when a PDN connection is established with the S/P GW. The PDN GW applies a Group based QoS policy based on the Group ID by interworking with the PCRF and establishes a shared PDN connection for the group, which is subject to the group level maximum aggregated bit rate control.

Huawei et. al "Enforcing group level policy", 3GPP draft; S2-124308, 3rd Generation Partnership Project (3GPP), Mobile Competence Centre ; 650; Route des Lucioles ; F-06921 Sophia-Antipolis Cedex ; France, SA WG2, New Orleans, USA; 20121112 - 20121116 6 November 2012 (2012-11-06), (http://www.3gpp.org/ftp/tsg_sa/WG2 Arch/TSG2 94 New Orleans/Docs) describes restricting the maximum number of PDN connections (or non-GBR bearers) per policy group to have a certain control over the traffic generated by the group. The PGW or the PCRF would apply the maximum number of PDN connections (or non-GBR bearers) per policy group during the establishment of a new PDN connection (or non-GBR bearer). It is required that the network selects the same GW for all policy group members.

EP 2 563 070 A1 discloses a congestion/overload control method and apparatus. The method includes: learning, by a gateway device, information about network access time of a User Equipment (UE) or UE group; and rejecting or discarding, by the gateway device, session management request messages of the UE or UEs in the UE group beyond the network access time of the UE or UE group; or discarding, by the gateway device, data of the UE or the UEs in the UE group beyond the network access time of the UE or UE group.

Applicants' WO 2011/006889 A1 relates to a method for congestion control in a telecommunications network. The telecommunications network supports one or more active data sessions between a server and at least a first and second communication terminal by providing at least a first and a second bearer for these terminals. The at least first and second communication terminal are assigned to a group for which a common group identifier is or has been stored. Further, a first individual congestion parameter for the first bearer and a second individual congestion parameter for the second bearer of the first and second communication terminal are or have been stored. A group load indicator is defined for the group of terminals corresponding to the common group identifier. The group load indicator is monitored and compared with a group load condition for the group of the at least first and second communication terminals corresponding to the common group identifier. Congestion is controlled by adjusting at least one of the first individual congestion parameter of the first bearer and the second individual congestion parameter of the second bearer when said group load indicator satisfies the group load condition.

### SUMMARY

The invention is defined by the appended independent claims and further embodiments are described by the dependent claims.

Any reference to inventions or embodiments not falling within the scope of the independent claims are to be interpreted as examples useful for understanding the invention. The use of multiple separate nodes in a telecommunications network by devices of a single group is a problem for controlling group policies for this group. A forced routing of connection requests from devices of a group via a single network node and/or a forced routing of connections of devices of a group with the network to traverse a single network node is a suboptimal solution, e.g. because such a solution reduces load balancing opportunities for network operators.

It is an object of the invention to enable network operators to perform group control functions for a group of devices, while the connection requests of these devices are made via multiple separate network nodes and/or the connections of these devices with entities within or external to the network traverse multiple separate network nodes.

To that end, a method is disclosed for performing a group control function for a group of devices in a telecommunications network. The group control function is associated with at least one group connection value condition defined for the group of devices. The telecommunications network comprises at least a first network node and a separate second network node, wherein the first network node and the second network node are connected to a common group control entity.

Member devices of the group of devices may request a connection with the network (e.g. a PDP context), from/via the first network node and/or from/via the second network node. When established, the connection of the member device with the network (e.g. the PDP context) traverses either the first network node or the second network node. The common group control entity obtains connection value information relating to the connections of the member devices of the group of devices with the network, which connections traverse either the first network node or the second network node. The common group control entity also obtains further connection value information relating to a connection-associated event triggered at the first network node or the second network node by a member device of the group of devices. It should be appreciated that such a connection-associated event are not only caused by member devices that did not have a previously established connection (i.e. further member devices of the group not connected originally), but may also be caused by member devices that already established one or more connections and, for example, request an additional connection or desires to prolong an established connection. Member devices are devices that may potentially be members of the group of devices, regardless whether the device has an established connection yet or not at a particular point in time.

The common group control entity determines whether an aggregate of the connection value information and the further connection value information fulfils the group connection value condition.

Furthermore, a computer program product implemented on a computer-readable storage medium is disclosed. The computer program product is configured for, when run on a computer, executing the method steps disclosed herein.

Still further, a group control entity is disclosed that is configured for performing a group control function for a group of devices in the telecommunications network. The group control function is associated with at least one group connection value condition defined for the group of devices. The group control entity is configured for being connected with at least a first network node and a second network node.

A connection can be made between a member device of the group of devices and the telecommunications network, where either the first node or the second node is traversed by the connection. The connection may terminate at an entity within or outside the telecommunications network, e.g. to an external MTC server.

The common group control entity is configured for obtaining connection value information relating to connections of member devices of the group of devices via the first network node and to connections of member devices of the group of devices via the second network node and also for obtaining further connection value information relating to a connection-associated event triggered at the first network node or at the second network node by a member device of the group of devices. The common group control entity is configured for determining whether an aggregate of the connection value information and the further connection value information fulfils the group connection value condition.

By allocating a common, e.g. shared, group control entity to multiple separate nodes of the telecommunications network, devices of the same group can still make connection requests or connections of these devices belonging to a group can still traverse separate nodes, while the common group control entity controls policies defined for the group of devices without requiring connection requests to be made via and/or connections to be made to traverse a single network node for devices of the same group.

The common group control entity may be used to monitor whether the group policy is fulfilled (i.e. complied with) and/or to enforce the group policy. Enforcing a group policy results in a control instruction from the common group control entity to the telecommunications network, e.g. to the node to which a connection request is made or to the node by which the connection is traversed.

It should be noted that the first network node and the second network node may be e.g. separate GGSNs or separate P-GWs of a telecommunications network.

A connection-associated event may e.g. comprise or consist of a connection request from a further device via or to the network node and/or it may relate to an established connection of a further device with the network which connection traverses the network node (e.g. expiry of a timer associated with the established connection and/or exceeding of a threshold of a value monitored for the established connection).

It is noted that the connection value information and the further connection value information represent values associated with the group connection value condition.

The connection value information and further connection value information may e.g. relate to the aggregate number (quantity) of connections or to the maximum bit rate parameter(s) of the connection(s) or to the bit rate(s) allocated to the connection(s) or to the bit rate(s) monitored on the connections). It is noted that the decision whether or not e.g. a bit rate or a particular connection is to be included in the aggregate may be subject to further conditions. For example, only connections within a certain area or connections of a particular radio access technology (RAT) may be included in the area.

Obtaining the connection value information and further connection value information may e.g. comprise counting indications of connection requests and/or indications of connection establishment and/or indications of connection release. It may also comprise registering indications of events related to connection of a group member device, such as the expiry of a timer associated with the connection and/or exceeding of a threshold by a value monitored for the connection. It may further comprise registering time intervals between such indications.

In an embodiment of the method, at least the further connection value information is obtained following e.g. the receipt at the common group control entity of a control request from the first network node or the second network node or following the receipt of control information from the first network node or the second network node, e.g. in dependence to which node a member device requests a connection or is connected. The connection value information may also be obtained following the receipt at the common group control entity of control request from the first network node and the second network node or following the receipt of control information from the first network node and the second network node in relation to the member devices. The control request or the control information are examples of indications of connections or connection requests on the basis of which connection value information and/or further connection value information can be obtained.

In an embodiment of the method, the common group control entity may further perform control actions based on the connection value information and the further connection value information in relation to the group connection value condition. Examples of such actions include instructing the first network node or the second network node to not grant a connection request for a further member device when the group connection value condition is not fulfilled. Another control action comprises instructing at least one of the first network node and the second network node to adapt a connection parameter of one or more of the connections of the member devices such that the group connection value condition is fulfilled. Yet another control action involves instructing the first network node or the second network node to grant a connection request from the further member device with an adapted connection parameter such that the group connection value condition is fulfilled. Adaptation of a connection parameter may e.g. comprise adaptation of the maximum bit rate parameter in the network of a connection (thus adapting the bit rate allowed on the connection) or of the bit rate allocated to a connection. Still another control action involves instructing the first network node or the second network node to grant the connection request when the group connection value condition is fulfilled.

In an embodiment of the method, the common group control entity instructs the first network node or the second network node to grant a connection request to establish a further connection for the further member device. The instruction may comprise at least one of a grant validity time for the further connection and a grant data size for the further connection. The grant validity time indicates a time period during which the grant is valid. Shortly before the expiry of the time period (e.g. when 90% of the time period has lapsed or at a predetermined period (e.g. 10 s) before the expiry of the time period), a new grant validity time may be transmitted to the network node in order to allow the further member device to continue using the connection after expiry of the previously granted time period. The grant data size indicates a data size (e.g. in units of bits, bytes, or predefined blocks thereof) that can be used for user data transmitted/received over the connection by the further member device. Separate grant data sizes may apply to user data transmitted and to user data received over the connection. Shortly before the amount of data is used (e.g. when 90% of the grant data size has been usurped or when a predetermined amount of data (e.g. 1 Mbyte) remains unused), a new grant data size may be transmitted to the network node in order to allow the further member device to transmit/receive more user data over the connection than the previously granted data size. Normally, the grant validity time and grant data size are selected such that the time period and data size are sufficient for the MTC application such that e.g. subsequent control requests and subsequent grants for a same connection are not frequently necessary, e.g. once per 1 minute, per 5 minutes or related to a typical duration of a data session of the MTC application. A grant validity time, a grant data size for transmitting user data and a grant data size for receiving data may be transmitted in separate instructions or several may be combined in a single instruction.

In an embodiment of the method, the at least one group connection value condition in the common group control entity relates to at least one of the aggregate number of connections established for the group of devices (the condition specifying an upper bound to the aggregate number of established connections) and the maximum data rate parameters (e.g. maximum bit rate parameters) for the established connections of the group of devices (the condition defining an upper bound to the aggregate of the maximum data rate parameters) and the allocated data rates for the established connections of the group of devices (the condition defining an upper bound to the aggregate of the allocated data rate parameters) and the monitored data rates (transmitted and/or received) on the established connections of the group of devices (the condition defining an upper bound to the aggregate of the aggregated data rate transmitted and/or received). If the aggregate number of connections does not meet the condition, the common group control entity may take action. Similarly, if the aggregated maximum data rate parameters or if the aggregated allocated data rates or if the aggregate of monitored data rates as defined in the policy does not meet the condition, the common group control entity may take action.

The disclosed method is based on the idea that, at least for some forms of MTC group policy control, an approach akin to online charging (e.g. prepaid) can be applied. Therefore, the 3GPP Gx, Gy or S9 interface can be applied for the exchange of control requests or control information from the network node(s) to the common group control entity. These interfaces are described in 3GPP TS 29.212, 3GPP TS 32.299 and 3GPP TS 29.215, respectively.

In an embodiment of the method, at least one of the common group control entity and the first network node or second network node has access to a database with device identifiers. A device identifier as used herein comprises an identifier associated with the device itself (comparable to IMEI - International Mobile Equipment Identity), or an identifier associated with the subscription assigned to the device (comparable to IMSI - International Mobile Subscriber Identity - e.g. contained in a SIM card or similar in the device), or a third party identifier configured in the device (e.g. assigned by and/or configured by the MTC subscriber), or a combination of such identifiers or parts thereof. Information may be received from the database by at least one of the common group control entity and the first network node and the second network node, enabling determination that the further member device belongs to the group of devices. The embodiment enables the common group control entity to determine the applicable group connection value condition.

In an embodiment of the method, a first instruction comprising a first group grant is transmitted to the first network node and a second instruction comprising a second group grant is transmitted to the second network node. Both the first group grant and the second group grant relate to the group of devices. The aggregate of the first group grant and the second group grant fulfils the group connection value condition. This embodiment facilitates that the combination of the first and second network nodes may enforce a single common group connection value condition in relation to the group of devices. This embodiment may also reduce the number of control requests and grants exchanged between the nodes and the common group control entity.

The first and second instruction may contain a group identifier associated with the group of devices. In this manner, the first and second network nodes are informed to which group of devices the instruction relates.

In an embodiment of the method, the common group control entity may further receive an indication that the further device is a device belonging to a device group and, in response to receiving the indication, consult a database with group identifiers and retrieving the group identifier associated with the group of devices, or possibly multiple group identifiers associated with multiple device groups to which the further device belongs. Consulting the database to retrieve one or more group identifiers may be accomplished on the basis of the received indication and on one or more of an identification of a (further) device, an identification of the terminal comprised in the further device, an identification of the subscription for a (further) device and an identification of the connection of a (further) device. This embodiment enables providing a general indication for devices belonging to a group (e.g. in a message from a device or in a message from a subscriber repository), while enabling finding the specific group of devices at a convenient location and time in the telecommunications system. Such an embodiment is efficient in case the telecommunications network serves e.g. a large number of devices, which devices may each belong to one or more groups.

Whereas the common group control entity performs group control functions, enforcing the group control, if needed, may be performed by the network node and it may further assist in identifying groups of devices.

In an embodiment, a telecommunications network node is disclosed that is configured for receiving a connection request from a member of the group of devices and/or for being traversed by a connection of the member of the group of devices with the telecommunications network and configured for connecting to the common group control entity. The network node is configured for receiving a group grant from the group control entity and for applying the group grant received from the group control entity to at least one of connection requests made by one or more member devices of the group of devices and one or more connections of the member devices of the group of devices traversing the network node.

Identifying the devices may be performed by the network node by processing an indication in the connection request received from a device or an indication associated with the connection of a device with the telecommunications network traversing the network node that the device belongs to a device group. If the indication is a group identifier of the group of devices, the processing involves applying the group grant to the request received from or to the connection of the device associated with the group identifier. In this embodiment, the connection request carries or the connection is associated with an explicit group identifier. Alternatively, if the indication is not a group identifier, the group identifier is retrieved on the basis of the indication and/or on one or more of an identification of the further device, an identification of the terminal comprised in the further device, an identification of the subscription for the further device and an identification of the connection of the further device and applying the group grant to the request received from or to the connection of the device associated with the retrieved group identifier. In this embodiment, the connection request carries or the connection is associated with a general indication that the device belongs to a device group, which is beneficial in that the actual group identifier can be retrieved at a convenient time and place in the telecommunications system.

In yet another embodiment, the network node may receive a group identifier of the group of devices from a network repository, such as a HLR or HSS. The group grant may then be applied to requests received from or to the connections of the devices associated with the received group identifier.

It is noted that the invention relates to all possible combinations of features recited in the claims. Thus, all features and advantages of the first aspect likewise apply to the second and third aspects, respectively.

### BRIEF DESCRIPTION OF THE DRAWINGS

Aspects of the invention will be explained in greater detail by reference to exemplary embodiments shown in the drawings, in which:
FIG. 1 is a schematic illustration of a prior art telecommunications network connecting devices to a server over a further network;
FIG. 2 is a schematic illustration of components of a 3G telecommunications system according to an embodiment of the disclosed method;
FIG. 3 is a block diagram of components of the telecommunications system of FIG. 2;
FIG. 4 is a time diagram illustrating steps in the telecommunications system according to a first embodiment of the disclosed method;
FIG. 5 is a flow chart illustrating steps by the common group control entity; and
FIG. 6 is a time diagram illustrating steps in the telecommunications system according to a second embodiment of the disclosed method.

### DETAILED DESCRIPTION

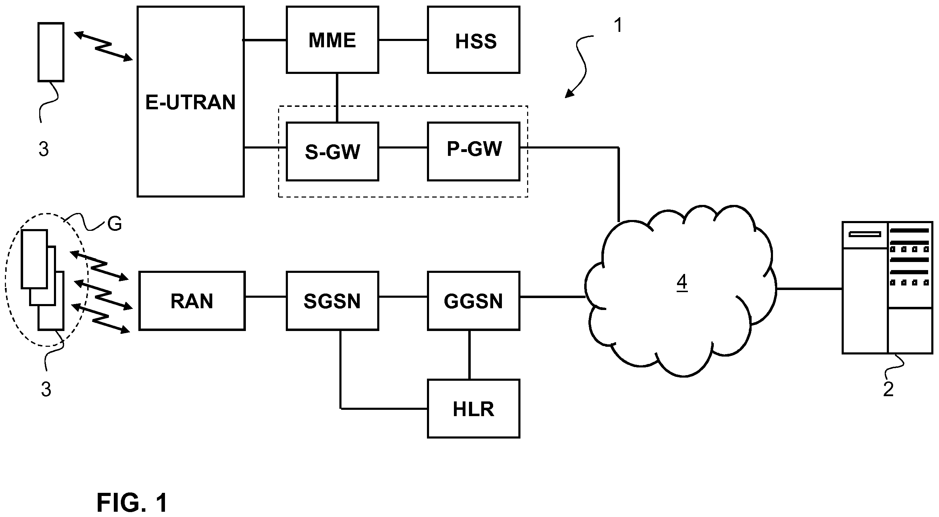

FIG. 1 shows a schematic illustration of a telecommunications system 1. The telecommunications system 1 allows to establish connections for user data, also referred to as data sessions or as PDP Contexts (as far as related to the section in the telecommunications network), between a server 2 and a device 3 over a packet data network 4, wherein access of the terminal to the telecommunications network 1 is wireless.

In the telecommunications system of FIG. 1, three generations of networks are schematically depicted together for purposes of brevity. A more detailed description of the architecture and overview can be found in 3GPP TS 23.002 which is included in the present application by reference in its entirety.

The lower branch of FIG. 1 represents a GPRS or UMTS network comprising a Gateway GPRS Support Node (GGSN), a Serving GPRS Support Node (SGSN) and a Radio Access Network (RAN or UTRAN). For a GSM/EDGE radio access network (GERAN), the RAN comprises a Base Station Controller (BSC) connected to a plurality of Base (Transceiver) Stations (BSs, BTSs), both not shown. For a UMTS radio access network (UTRAN), the RAN comprises a Radio Network Controller (RNC) connected to a plurality of NodeBs), also not shown. The GGSN and the SGSN are conventionally connected to a Home Location Register (HLR) or Home Subscriber Server (HSS) that contains subscription information of the devices 3.

The upper branch in FIG. 1 represents a next generation network, commonly indicated as Long Term Evolution (LTE) or Evolved Packet System (EPS). Such a network comprises a PDN Gateway (P-GW) and a Serving Gateway (S-GW). The E-UTRAN of the EPS comprises evolved NodeBs (eNodeBs or eNBs) providing wireless access for a device 3 that is connected to the S-GW via a packet network. The S-GW is connected to a Home Subscriber Server HSS and a Mobility Management Entity MME for signalling purposes. The HSS includes a subscription profile repository SPR.

Further information of the general architecture of a EPS network can be found in 3GPP TS 23.401.

Of course, architectures other than defined by 3GGP, e.g. WiMAx or cable networks, can also be used within the context of the present disclosure.

Whereas the invention as defined in the appended claims is generally applicable to such systems, a more detailed description will be provided below for a GPRS/UMTS system.

For such a telecommunications system 1, the SGSN typically controls the connection between the telecommunications network 1 and the device 3. It should be appreciated that the telecommunications network 1 generally comprises a plurality of SGSNs, wherein each of the SGSNs is connected typically to several BSCs/RNCs to provide a packet service for terminals 3 via several base stations/NodeBs.

The GGSN is connected to the packet data network 4, e.g. the internet, a corporate network or a network of another operator. On the other side, the GGSN is connected to one or more SGSNs. The GGSN is configured for receiving a data unit (e.g. an IP packet) for a device 3 from the server 2 over the network 4 (downlink) and for transmitting a data unit (e.g. an IP packet) to the server 2 received from a device 3 (uplink). Though only a single GGSN is shown in Fig. 1, a single network generally comprises multiple such GGSNs.

In many M2M applications, a single server 2 normally is used for communication with a large number of devices 3. Individual devices 3 can be identified by individual identifiers, such as an IP address, an IMSI, an IMEI or another terminal identifier, such as a serial number, for example one assigned by the terminal owner/administrator, by the manufacturer or by a third party.

As already mentioned in the background, group based MTC features have been proposed that apply to groups of devices 3. Such a group is identified by G in FIG. 1. MTC features are defined as network functions to optimise the network for use by M2M applications. Groups G of devices are defined as devices that share one or more MTC features and that belong to the same MTC subscriber. An MTC subscriber is defined as a legal entity having a contractual relationship with a network operator to provide service to one or more of the MTC devices.

For a group of devices, policies may be defined that need to be applied for such a group G of devices. An MTC subscriber may e.g. have 10 million devices. The contract with the network operator may allow for e.g. 10 thousand established connections (PDP contexts) at any time. The network operator may want to control (i.e. monitor and/or enforce) that the MTC subscriber complies with the contract to e.g. avoid peak load or to control contractual terms. Another example of a group based policy MTC feature that can be controlled may relate to the bit rate for the data that is transmitted/received by the devices in an MTC group.

The devices 3 of the MTC subscriber may be located in or roam through a large area. The devices in the area may be served by separate network nodes, e.g. separate GGSNs or separate P-GWs. Network operators may also apply separate network nodes to enable load sharing.

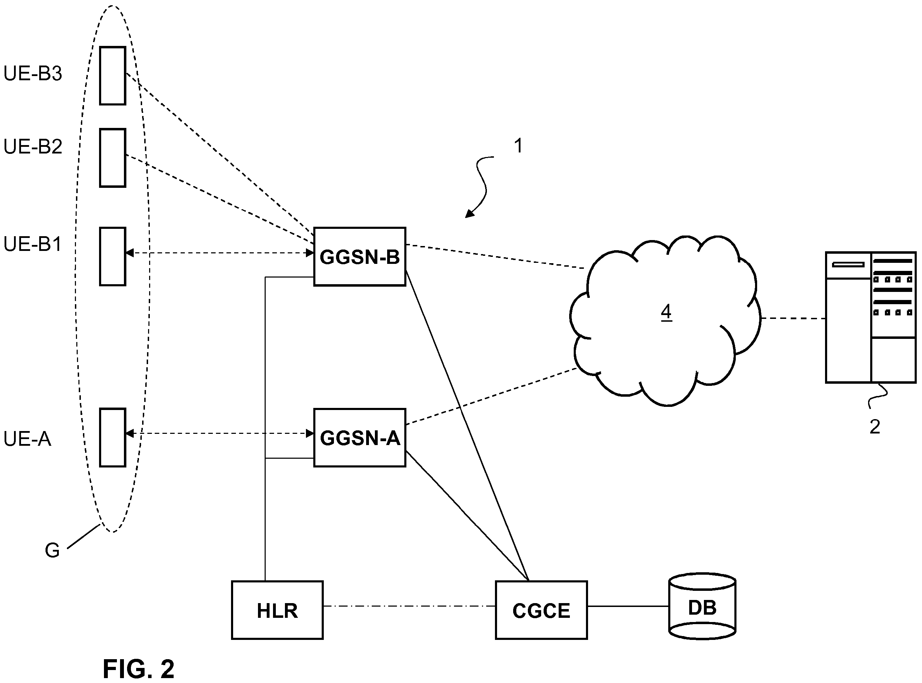

FIG. 2 is a schematic illustration of components of a telecommunications system 1 according to an embodiment of the disclosed method. In the telecommunications system 1, the network operator operates two telecommunications network nodes GGSN-A and GGSN-B for data communication with a group G of MTC devices UE-A, UE-B1, UE-B2 and UE-B3. It should be appreciated that in practice the number of MTC devices may be (much) larger.

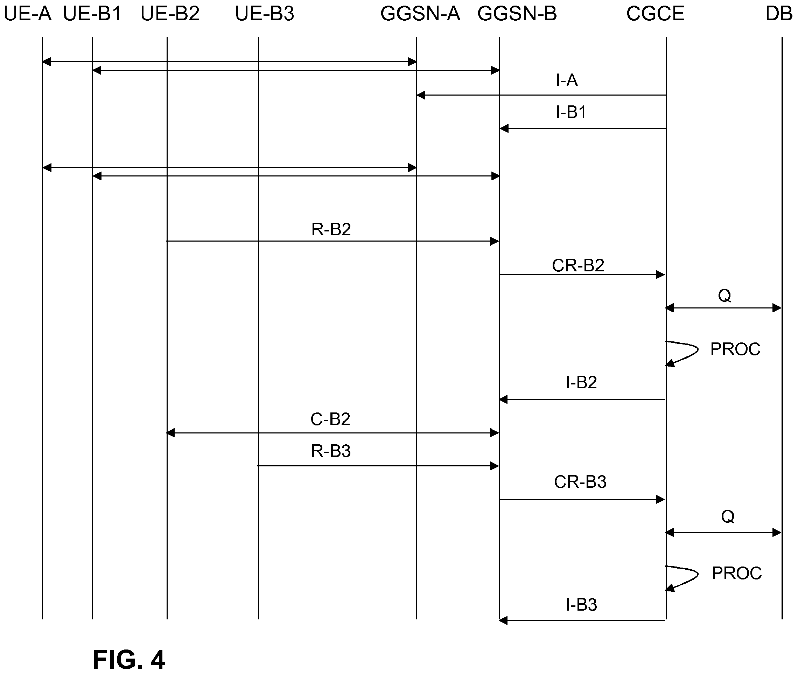

In addition to the components described with reference to FIG. 1, the telecommunications system of FIG. 2 comprises a common group control entity CGCE. The CGCE is configured for performing a group control function for the group G of UE devices UE-A, UE-B1, UE-B2 and UE-B3. It should be clear from the comparison with FIG. 1 that intermediary nodes will normally be present between the devices and the GGSNs. In FIG. 2, MTC terminal UE-A is connected to the telecommunications network to provide a connection for the exchange of user data (a PDP Context), e.g. with server 2, which connection traverses GGSN-A. UE-B1 is connected to the telecommunications network to provide a connection for the exchange of user data (a PDP Context), e.g. with server 2, which connection traverses GGSN-B. UE-B2 and UE-B3 may each request a connection (may each request to set up a PDP Context), which connections will traverse GGSN-B as will be described with reference to FIG. 4. The CGCE is communicably connected with GGSN-A and is communicably connected with GGSN-B.

The group control function of the CGCE is associated with at least one group connection value condition defined for the group G of devices UE-A, UE-B1, UE-B2 and UE-B3. Examples of such group connection value conditions include a condition relating to the number of established connections (e.g. PDP Contexts) for the group G, or the aggregate data rate (e.g. bit rate) allowed for or allocated to the group G. As an example, in the CGCE a group connection value condition may have been defined that the number of established connections of the devices of group G must be not higher than the value 3. Control may be exercised if the number of connections is higher than 3 (or is bound to become higher than 3). Alternatively, or in addition, the aggregate of the maximum uplink data rate parameters for the group G may be defined as to be not higher than 10 Mbit/s, where a maximum uplink data rate parameter relates to a parameter of a connection, such as, for example, a maximum bitrate parameter, e.g. 2 Mbit/s, 4 Mbit/s or 8 Mbit/s, for the uplink direction as commonly associated with a terminal connection. If the aggregate of the maximum uplink data rate parameters is (bound to become) higher than 10 Mbit/s, control may be exercised. Another alternative or addition, is that the aggregate of the allocated uplink data rates for the group G may be defined as to be not higher than 8 Mbit/s, where an allocated uplink data rate, e.g. 1 Mbit/s, 3 Mbit/s or 5 Mbit/s, relates to the uplink data rate allocated to a connection. The allocated data rate may represent a reserved or guaranteed data rate and/or may represent a weight for the connection (the weights for the connections being used in a so-called weighted scheduling or weighted (fair) queuing approach in relevant nodes of the network, such as routers, switches, MPLS nodes, SGSN, GGSN, etc. If the aggregate allocated uplink data rate is (bound to become) higher than 10 Mbit/s, control may be exercised. Yet another alternative or addition, is that the aggregate actual uplink data rate for the group G may be defined as to be not higher than 5 Mbit/s (possibly for a particular time interval), where the aggregate actual uplink data rate relates to the aggregate of the actual rate of the data transmitted by the terminals in the group G together (e.g. during the particular time interval). If the aggregate actual uplink data rate is (bound to become) higher than 5 Mbit/s, control may be exercised. It should be noted that the conditions may be defined by the network operator so as to provide some headroom for or to allow some overbooking by the MTC subscriber; or to allow some margin for inaccuracies and/or latency in, for example, measurement equipment.

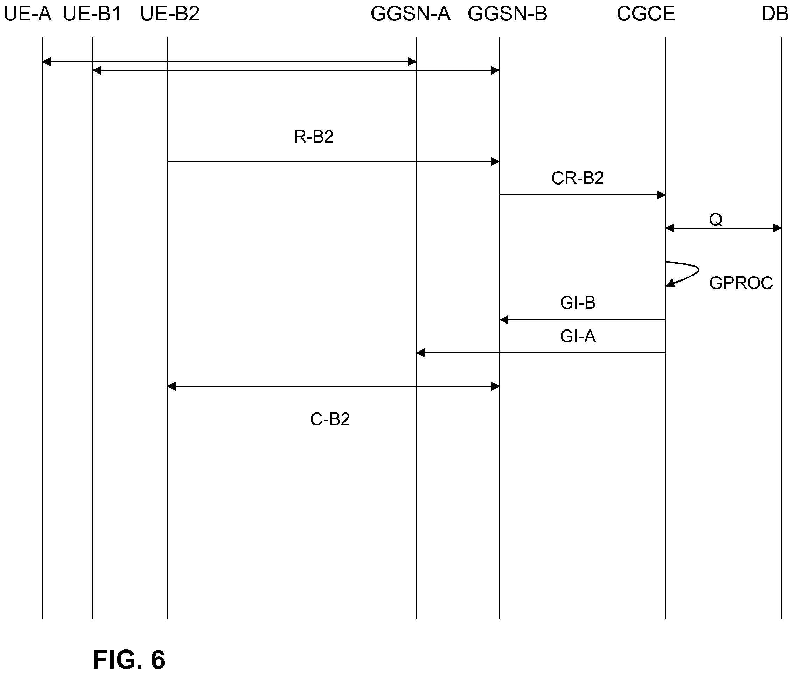

The CGCE is communicably connected with a database DB. Database DB may e.g. store relationships between individual identifiers (or combinations thereof) of the MTC devices and the group G, such that the CGCE may determine whether or not a particular MTC device belongs to a particular group and decide on that basis on the applicable group connection value condition. Alternatively or additionally, the CGCE may be communicably connected with the HLR (or HSS) as indicated by the dash-dotted line in FIG. 2 if (part of) this information is available in the HLR (or HSS). The database DB and/or the HLR may also contain group identifiers, the application of which will be described with reference to FIG. 6.

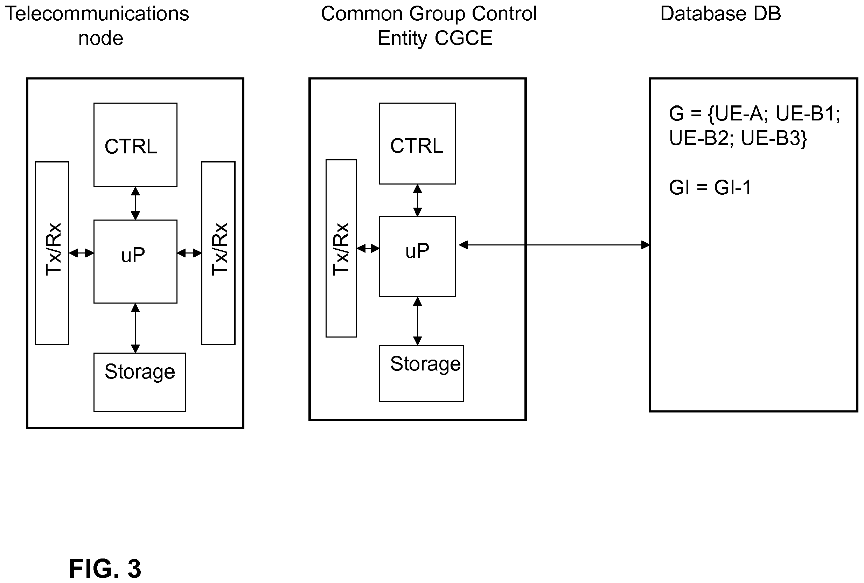

FIG. 3 is a schematic system block diagram illustrating a network node, a common group control entity CGCE and a database DB according to an embodiment of the invention. In the block diagrams, some components for performing the disclosed method are schematically illustrated. Functions disclosed in the present application may be implemented in hardware, software or in a hybrid fashion.

The network node and the CGCE may each contain at least contain a processor uP for executing actions, a controller CTRL for controlling actions by the processor uP and one or more forms of storage (not shown) for storing computer programs and (intermediate) processing results. The network node contains a storage for e.g. storing group identifiers. Obviously, the network node and the CGCE comprise communication interfaces (Tx/Rx), at least for communication with the telecommunications network. The network node is configured for receiving connection requests initiated from the MTC device(s) and for connecting with and/or being connected to the CGCE. The communication interface Tx/Rx of the CGCE is configured for connecting with and/or for being connected to at least two network nodes. The database DB stores data relevant for associating MTC devices with a group G. The database may also store a group identifier GI. The group identifier GI for the devices of the group G is GI-1.

FIG. 4 is a time diagram illustrating steps in the telecommunications system 1 of FIG. 2 involving the CGCE. In this example, it is assumed that connections C-A and C-B1 exist (the connections not shown in Fig. 4); connection C-A for UE-A to a further network (not shown) traversing GGSN-A and connection C-B1 for UE-B1 to a further network (not shown) traversing GGSN-B. The CGCE has issued instructions I-A and I-B1 to GGSN-A and GGSN-B, respectively, enabling continuation of these connections after determining that an aggregate group connection value condition was (still) met. I-A and I-B1 have been triggered in response to an event associated with the connections of UE-A and UE-B1 traversing GGSN-A and GGSN-B, respectively.

In this example, it is assumed that the aggregate group connection value relates to the number of established (coexisting) connections for the group G, where the number of (coexisting) connections should be not higher than three connections at any time. Further, each of the connections for a device of the group G may be assumed to have a maximum data rate parameter value (e.g. maximum bit rate parameter value for the uplink direction) of 10 Mbit/s, though this value is of subordinate importance to this example.

At a certain point in time, a request R-B2 for a connection, triggered by UE-B2, is received by GGSN-B. In order to verify whether this request can be accommodated in view of the aggregate group connection value, GGSN-B issues a control request CR-B2 to the CGCE. Alternatively, connection information may be sent to the CGCE that is used by the CGCE to perform a group control function; for example, GGSN-A may (e.g. periodically and/or triggered by an event at the GGSN-A) send connection information to the CGCE.

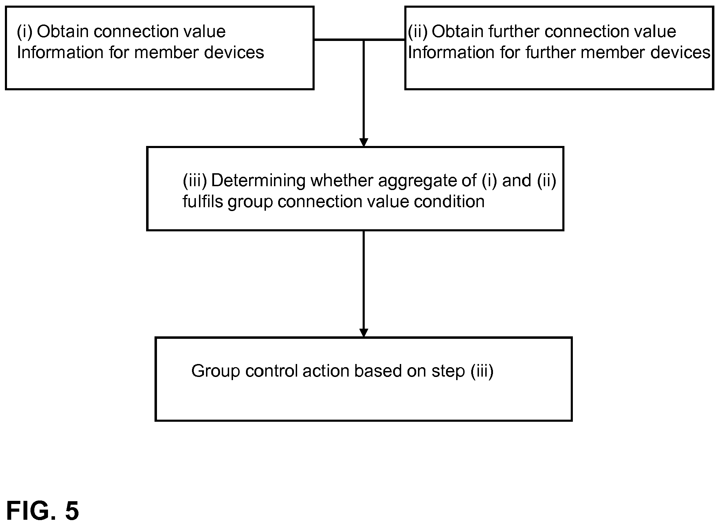

First, the CGCE queries Q the database DB to determine the group G to which UE-B2 belongs. Since UE-B2 belongs to the same group G as UE-A and UE-B1, the CGCE determines that the above mentioned aggregate group connection value condition applies also to the connection request of UE-B2. Then, the CGCE performs a processing step PROC, depicted in the flow chart of FIG. 5, wherein it obtains (or has previously obtained) connection value information relating to the connections of the member devices of the group G that traverse either GGSN-A or GGSN-B, i.e. relating to the connections of UE-A and UE-B1. This connection value information involves the number of connections, i.e. one connection of UE-A traversing GGSN-A and one connection of UE-B1 traversing GGSN-B, yielding a number of two connections as connection value information. The CGCE may obtain the number of (co-existent) established connections for the group G, e.g. from the number of (at that moment still valid) instructions previously issued for devices of group G to the various network nodes GGSN-A and GGSN-B, e.g. from the instructions I-A and I-B1. Alternatively or in addition, the CGCE may obtain such information from the various network nodes GGSN-A and GGSN-B, for example, when each of the network nodes reports to the CGCE an occurrence of establishment and of release of a connection traversing the particular network node. Also, when network nodes (e.g. GGSN-A) have information about the group G to which a connection belongs that traverses the particular network node (e.g. GGSN-A), the network node may report to the CGCE the number of established connections for the group G that traverse the particular network node (e.g. GGSN-A). Such reports from a network node to the CGCE may be provided e.g. periodically and/or on request of the CGCE and/or triggered by an event associated with one of the connections for group G traversing the particular network node (e.g. GGSN-A).

The CGCE also obtains further connection value information relating to the connection-associated event (here the connection request R-B2) triggered at GGSN-B by further member device UE-B2 of the group G. In this example, a connection for UE-B2 is requested with request R-B2. The CGCE then determines in a determination step whether an aggregate of the connection value information and the further connection value information for the further member device UE-B2 fulfils the group connection value condition. In the present example, the group connection value condition is fulfilled since the aggregate number of connections would be three if the connection request R-B2 would be allowed, where the condition was not more than three connections. Accordingly, the CGCE issues an instruction I-B2 allowing the GGSN-B to grant the connection request R-B2. In summary, the group connection value condition is fulfilled (complied with) even when separate telecommunication network nodes GGSN-A and GGSN-B are involved. Hence, a connection C-B2 (not shown in Fig. 4) may be established for UE-B2 with a further network (not shown), irrespective of the network node via which the request and/or the connection is routed (in this example via GGSN-B). In Fig. 4, establishment of the connection for UE-B2 is indicated as CE-B2. Establishing a connection for UE-B2 may comprise establishing a PDP context for UE-B2.

At a later point in time, a further request R-B3 for a connection, triggered by UE-B3, is received by GGSN-B. Again, in order to verify whether a grant of the connection request would fulfil (comply with) the group connection value requirement for the group G, GGSN-B issues a control request CR-B3 to the CGCE, which in turn determines that UE-B3 belongs to group G by querying the database DB. Again, processing PROC involves obtaining the connection value information relating to existing connections (of UE-A, UE-B1 and now also UE-B2) and further connection value information relating to the connection-associated event, i.e. request R-B3. The determination step will now yield that the aggregated number of connections (three established connections and one additionally requested connection) would not satisfy the group connection value condition on the number of connections (which is not higher than three connections). Accordingly, in step I-B3, the GGSN-B may be instructed to not grant the connection request R-B3. It should be noted that if the group policy would have been defined on the number of connections per individual, separate GGSN, the connection request of UE-B3 would have been allowed, since the connection of UE-A traversing the other GGSN-A would have been missed.

Note that in this example, where the connection value condition relates to the number of established connections for the group G, that, because each of the connections is assumed to have a maximum data rate parameter (e.g. a maximum bit rate parameter value) of 10 Mbit/s, the connection value condition in this example also implies that the aggregated maximum data rate of the devices in the group G is not higher than 30 Mbit/s (three times 10 Mbit/s). Further assuming that the maximum data rate parameter of a connection (e.g. a connection's maximum bit rate parameter) is monitored and enforced for each connection (which is rather common in networks for mobile communication), it also implies that the aggregated actual data rate for the connections of the group G also cannot be higher than 30 Mbit/s.

Instead of not granting request R-B3 to ensure and to enforce fulfilment of (compliance with) the group connection value condition, alternatively, connection request R-B3 may be granted and the failure to fulfil (to comply with) the group connection value condition may be just monitored and, possibly, a corresponding report or alarm may be forwarded, e.g. to a network management entity in the telecommunications network and/or to the MTC subscriber.

In order to allow the CGCE to obtain the number of established connections, the GGSNs may report to the CGCE when a connection (e.g. a PDP Context) via that GGSN is initiated (established, set up) and when it is ended (released, terminated). In this manner, the CGCE may keep track of the number of established connections of a group irrespective of the distribution of the connections over various network nodes, such as GGSNs.

In this example, it is assumed that the aggregate group connection value relates to maximum data rate parameter values (e.g. a connection's maximum bit rate parameter value for the uplink direction, here indicated as MBRu) of established (coexisting) connections for the group G, where the aggregate of the maximum bitrate parameter values should be not higher than e.g. 10 Mbit/s at any time. Each of the connections for a device of the group G is assumed to have a maximum data rate parameter (e.g. a maximum bit rate parameter for the uplink direction, MBRu), which value may differ between connections and is typically determined when establishing the connection, e.g. based on a value requested by the device (terminal, user), based on the subscription or based on a combination of a requested value and an allowed value for the subscription. In this example it is further assumed that the MBRu parameter values are 3 Mbit/s for the connection for UE-A and 4 Mbit/s for the connection for UE-B1.

At a certain point in time, a request R-B2 for a connection, triggered by UE-B2, is received by GGSN-B. In order to verify whether this request can be accommodated in view of the aggregate group connection value, GGSN-B issues a control request CR-B2 to the CGCE. Alternatively, connection information may be sent to the CGCE that is used by the CGCE to perform a group control function, as mentioned above.

First, the CGCE queries Q the database DB to determine the group G to which UE-B2 belongs. Since UE-B2 belongs to the same group G as UE-A and UE-B1, the CGCE determines that the above mentioned aggregate group connection value condition applies also to the connection request of UE-B2. Then, the CGCE performs a processing step PROC, depicted in the flow chart of FIG. 5, wherein it obtains (or has previously obtained) connection value information relating the established connections of the member devices of the group G that traverse either GGSN-A or GGSN-B, i.e. MBRu parameters for the connections C-A of UE-A (3 Mbit/s) and C-B1 of UE-B1 (4 Mbit/s). This yields 7 Mbit/s as connection value information. The CGCE may obtain the MBRu parameter values of established connections for the group G, e.g. from the (at that moment still valid) instructions previously issued for devices of group G to the various network nodes GGSN-A and GGSN-B, e.g. from the previous instructions I-A and I-B1. Alternatively or in addition, the CGCE may obtain such information from the various network nodes GGSN-A and GGSN-B, for example, when each of the network nodes reports to the CGCE the MBRu parameter value of the relevant connections (i.e. 3 Mbit/s for the connection C-A of UE-A which traverses GGSN-A and 5 Mbit/s for the connection C-B1 of UE-B1 which traverses GGSN-B). Then, if there are multiple connections of a group traversing a particular network node, the network node may also report an aggregate of the MBRu parameters values for the group, instead of reporting separate MBRu values. Also, when network nodes (e.g. GGSN-A) are provided with information about the group G to which a connection belongs that traverses the particular network node (e.g. GGSN-A), the network node may report to the CGCE the aggregated MBRu values of established connections for the group G that traverse the particular network node (e.g. GGSN-A). Such reports from a network node to the CGCE may be provided e.g. periodically and/or on request of the CGCE and/or triggered by an event associated with one of the connections for group G traversing the particular network node (e.g. GGSN-A).

The CGCE also obtains further connection value information relating to the connection-associated event (here the connection request R-B2) triggered at GGSN-B by further member device UE-B2 of the group G. In this example, with request R-B2, a connection for UE-B2 is requested with an MBRu parameter value of 2 Mbit/s (which value may be comprised in the request or may be determined from UE-B2's subscription parameters or may be determined by a combination of a requested parameter value and a subscribed allowed value). The CGCE then determines in a determination step whether an aggregate of the connection value information and the further connection value information for the further member device UE-B2 fulfils the group connection value condition. In the present example, the group connection value condition is fulfilled since the aggregate of the MBRu parameter values of the connections would be 9 Mbit/s if the connection request R-B2 (with MBRu = 2 Mbit/s) would be allowed, where the condition was not more than 10 Mbit/s. Accordingly, the CGCE issues an instruction I-B2 allowing the GGSN-B to grant the connection request R-B2, possibly also specifying the MBRu parameter value 2 Mbit/s. In summary, the group connection value condition is fulfilled (complied with) even when separate telecommunication network nodes GGSN-A and GGSN-B are involved. Hence, a connection may be established for UE-B2 with a further network (not shown), irrespective of the network node via which the request and/or the connection is routed (in this example via GGSN-B). In Fig. 4, establishment of the connection for UE-B2 is indicated as CE-B2. Establishing a connection for UE-B2 may comprise establishing a PDP context for UE-B2.

At a later point in time, a further request R-B3 for a connection, triggered by UE-B3, is received by GGSN-B. Again, in order to verify whether a grant of the connection request would fulfil (comply with) the group connection value requirement for the group G, GGSN-B issues a control request CR-B3 to the CGCE, which in turn determines that UE-B3 belongs to group G by querying the database DB. Again, processing PROC involves obtaining the connection value information relating to existing connections (C-A of UE-A, C-B1 of UE-B1 and now also C-B2 of UE-B2) and further connection value information relating to the connection-associated event, i.e. request R-B3. Assuming that the request R-B3 relates to a connection with an MBRu parameter of 5 Mbit/s, the determination step will now yield that the aggregated MBRu parameter values (9 Mbit/s for the three established connections and 5 Mbit/s for the additional requested connection) would not satisfy the group connection value condition on the aggregate MBRu parameter values (which is not higher than 10 Mbit/s). Accordingly, in step I-B3, the GGSN-B may be instructed to not grant the connection request R-B3.

It should be noted that connection request R-B3 could still be granted with an adapted MBRu parameter of e.g. 1 Mbit/s for the requested connection or could still be granted with an adapted (i.e. reduced) MBRu parameter of e.g. 2 Mbit/s for the requested connection and by also adapting (i.e. reducing) the MBRu parameter of one or more of the existing connections (C-A for UE-A, C-B1 for UE-B1 and C-B2 for UE-B2) such that the group connection value condition on the aggregate of the MBRu parameter values for the group G is fulfilled.

Further assuming that the maximum data rate parameter of a connection (such as a connection's maximum bit rate parameter in the uplink direction, MBRu) is monitored and enforced for each connection (which is rather common in networks for mobile communication), fulfilling the connection value condition in this example also implies that the aggregated actual data rate for the connections of the group G also cannot be higher than 10 Mbit/s in the uplink direction.

Instead of not granting request R-B3 to ensure and to enforce fulfilment of (compliance with) the group connection value condition, alternatively, connection request R-B3 may be granted and the failure to fulfil (to comply with) the group connection value condition may be just monitored and, possibly, a corresponding report or alarm may be forwarded, e.g. to a network management entity in the telecommunications network and/or to the MTC subscriber.

In order to allow the CGCE to obtain the MBRu parameter values of established connections, the GGSNs may report to the CGCE the MBRu parameter value, e.g. when a connection (e.g. a PDP Context) via that GGSN is initiated (established, set up) and when the MBRu parameter value is modified. In this manner, the CGCE may keep track of MBRu parameter values of established connections of a group irrespective of the distribution of the connections over various network nodes, such as GGSNs.

The above example, where the group connection value condition relates to a maximum data rate parameter, such as a connection's maximum bitrate (MBR) parameter for the uplink or downlink direction, may be applied in the same way to a group connection value condition relating to an allocated bitrate parameter value (for the uplink or downlink direction). An allocated bitrate parameter may represent the bitrate guaranteed to be available to the connection. It may also represent a weight for the connection, which weight can be used for a so-called weighted scheduling or weighted (fair) queueing of packets transmitted over the connection. Then, the relevant nodes of the network (such as routers, switches, MPLS nodes, SGSN, GGSN, etc.), at least as far as applicable, are also to be informed. Informing applicable nodes in the network may be comprised in the establishment of the connection, such as establishment of the connection for UE-B2 is indicated as CE-B2 in Fig. 4.

A group connection value condition may be more complex than in the above examples with a single condition. A group value condition may for example comprise multiple conditions combined with commonly known logical operators (AND, OR, NOT, etc.), for example a group value condition specifying that, for the group G, (i) the number of (coexisting, established) connections must be not higher than the value 4 and that (ii) the aggregate of the maximum bitrate parameter values for the downlink direction should be not higher than 10 Mbit/s and that (iii) the aggregate of the allocated bitrate parameter values for the uplink direction should be not higher than 5 Mbit/s. In this example, the group connection value condition is fulfilled if each of the three conditions (i) to (iii) is fulfilled for the group G. Another example of a more complex group connection value condition is a group connection value condition specifying, for the group G, that (i) the number of (coexisting, established) connections with a maximum bitrate parameter value equal to or larger than 3 Mbit/s must be not higher than the value 2 (thus not specifying an upper bound to the number of connections with a maximum bitrate parameter smaller than 3 Mbit/s) and that (ii) the aggregate of the maximum bitrate parameter values should be not higher than 15 Mbit/s both for the uplink and the downlink direction and that (iii) the aggregate of the allocated bitrate parameter values in the uplink direction for connections with an allocated bitrate parameter value equal to or larger than 1 Mbit/s in the uplink direction should be not higher than 6 Mbit/s.

Determination of devices belonging to a group has been described above with reference to a database DB or, possibly, using the HLR/HSS. Device identification can be implemented in a variety of ways. For example, it may be based on a device identifier, which may comprise an identifier associated with the device itself (comparable to IMEI - International Mobile Equipment Identity), or an identifier associated with the subscription assigned to the device (comparable to IMSI - International Mobile Subscriber Identity - e.g. contained in a SIM card or similar in the device), or a third party identifier configured in the device (e.g. assigned by and/or configured by the MTC subscriber), or a combination of such identifiers or parts thereof. Devices belonging to a specific group may have been assigned an identifier, e.g. an IMSI, in a particular (IMSI) range, such that the telecommunications network node and/or the CGCE can determine, from the device identifier being in the particular range, that the device belongs to this specific group. Another example includes the applicable APN (Access Point Name). In the HLR/HSS, it may be registered that only devices that belong to a group G have access to a particular APN. Therefore, devices making connection requests to the particular APN of group G belong to group G. It is also possible that the connection request or the connection or other signalling information carries a general group indication, for example one bit or one particular value of a parameter, that indicates that the device is part of a group. This information may also be stored in the HLR/HSS. (Currently, only so-called charging type' parameter values 1 and 7 are used in the HLR/HSS; a different value of the charging type' parameter may be used to indicate that a device is a member of a device group). Such a general group indication, e.g. comprised in a connection request, may advantageously be used, e.g. in a network node such as a GGSN, to distinguish a request for a device that belongs to a group (for which the network node is to issue a control request to the CGCE) from a conventional request (related to a device not in a group and which may be treated in the conventional way without the network node issuing a control request to the CGCE). Hence, only for requests carrying such a general group indication (or for requests otherwise associated with this indication) it may subsequently be determined to which specific group G the device belongs (see the examples above), thus reducing the work load for e.g. the network node (e.g. GGSN) and/or the CGCE and/or the associated data base. Other identification mechanisms have been envisaged based on e.g. a requested URL, an identifier provided in the connection request from the MTC device, special MS-ISDN numbering, device identifiers, etc.

In an embodiment of the method and CGCE, the instructions I to the network node GGSN-B may take a form reminiscent of online charging systems (OCS). The existing 3GPP Gx, Gy or S9 interface can be applied for the exchange of control requests or control information from the network node(s) to the common group control entity. These interfaces are described in 3GPP TS 29.212, 3GPP TS 32.299 and 3GPP TS 29.215 respectively. The application of the S9 interface enables application of the disclosed method even between network nodes of different operators, e.g. a GGSN in the home network and a GGSN in a visited network. In such systems, instructions are provided according to a Diameter protocol to the network node.

In an embodiment of the method and CGCE an instruction I from the CGCE to a network node comprises at least one of a grant validity time and a grant data size, e.g. for the further connection C-B2. The grant validity time indicates a time period during which the grant for the connection is valid. A grant validity time may commence immediately such that specifying an end of the time period suffices; for example relatively, e.g. as 'until 12 minutes from now', or absolutely, e.g. as 'until today 13h14'. Alternatively, the time period may be specified with a starting time (e.g. 13h02) and with either a duration (e.g. 12 minutes) or an end time (e.g. 13h14). Preferably shortly before the expiry of the indicated time period, a new grant (instruction comprising an updated or supplementary grant validity time) may be transmitted to the GGSN-B in order to allow the member device UE-B2 to continue using the connection C-B2 after expiry of the previously indicated time period. The updated or supplementary grant validity time may specify a time period that is preferably adjacent to or overlaps with the previously indicated time period, such unnecessary gaps between consecutive time periods can be avoided.

The grant data size indicates a data size (e.g. in units of bits, bytes, or predefined blocks thereof) that can be used for user data transmitted or received by the further member device UE-B2 over the connection C-B2. Shortly before the amount of data has been usurped (e.g. when 90% of the grant data size has been used or when a predetermined amount of data (e.g. 1 Mbyte) remains unused), a new grant (instruction comprising a new or supplementary grant data size) may be transmitted to the network node in order to allow the member device UE-B2 to continue to transmit and/or to receive more user data over the connection C-B2 than the previously granted data size.

It may be that to a connection, such as connection C-B2, only a grant validity time applies, in which case the instructions I for connection C-B2 comprise only an indication of a grant validity time. Or it may be that to connection C-B2 only a grant data size applies, in which case the instructions I for connection C-B2 comprise only an indication of a grant data size. It may also be that to connection C-B2 both a grant validity time and a grant data size applies, in which case at least some of the instructions I for connection C-B2 may comprise both an indication of a grant validity time and an indication of a grant data size.

Normally, the grant validity time and grant data size for a connection are selected such that the time period and data size are sufficient for the MTC application for which the connection is established such that e.g. new (additional) control requests CR and/or new (additional) instructions I for a same connection are not frequently necessary, e.g. once per 1 minute, per 5 minutes or related to a typical duration of a data session of the MTC application.

Controlling the aggregated data rate (e.g. aggregate bit rate) of a group of devices (e.g. MTC devices) may be performed as follows. A device may be configured to set up a PDP context when it is powered on. The PDP context may be set up to a particular APN as specified in the subscription profile in HLR/HSS for the devices of the MTC subscriber. The subscription profile in the HLR/HSS typically also specifies the maximum bit rate parameter values for the connection between the device and the network, for example for the uplink direction (MBRu) 100 kbit/s and for the downlink (MBRd) direction 100 kbit/s). The HLR/HSS may also include an entry with an indicator indicating that the device is an MTC device. Alternatively, the network node (GGSN or P-GW) may determine that the device is an MTC device on the basis of the particular selected (subscribed) APN as described above. The GGSN sends a charging control request CCR (this is the terminology used in OCS; the request may be similar to a control request CR in FIG. 4) to the CGCE based on the identifier of the session (a unique group identifier from the HLR/HSS or another ID as described previously) The CGCE returns a credit control answer CCA (this is the terminology used in OCS; the message is similar to an instruction I in FIG. 4). The CCA or instruction I contains a grant data size (e.g. 1 Mbyte) and a grant validity time of e.g. 1 minute for a session of that device, i.e. a PDP context for the device. The CGCE may calculate an aggregate group data rate on the basis of the issued CCAs or instructions I, e.g. by adding the grant data sizes for all the connections in the group G divided by an averaging time window for all the connections in the group.

A few examples will now be discussed.

A corporate customer with a thousand employees has a group subscription. In the contract with the customer, the operator has specified conditions to limit the burden that these corporate users can pose on the network. A policy may state that the aggregated maximum bitrate for that group of subscription may not exceed 100Mbps for more than 1 minute. To enforce this group-policy, the operator need to determine the bitrate for that group. Devices belonging to a group may initiate sessions that are distributed over time. For example: one devices sets up a session at time t. Another device from the group initiates a session at t+1sec, another at t+3 sec, etc. The CGCE may also be used to enforce that sessions are distributed over time by delaying issuing grants if there is a peak of requests from devices.

In order to enforce the maximum bit rate group policy, one or more calculations need to be performed. The portion of the grant data size of the previous grants that is consumed for new grant(s) is determined for each new grant request. This step is performed when the grant period is (close to) expiring) or when the granted data volume is (close to) be consumed. The portion of the grant data size is a measure of the data rate.

For an averaging time window, the data volume for the group is determined. The CGCE determines the data volume for the group by summing over an averaging time window the determined portions of grant data size for all grants issued for sessions belonging to the group.

The average bit rate (bits per second) is determined by dividing the data volume for the group by the averaging time window (e.g. 60 seconds) over which the data volume is summed. In an example wherein a group of four member devices consumes 900MB, 100MB, 900MB and 100MB over a time window of [t;t+x], a total amount of 2000MB of data is consumed, equivalent to 16Gbits. Assuming that x = 160 seconds, the bit rate in the time interval is 100Mbits/sec.

Then, the group policy may be enforced. If the group policy states that the max bitrate (aggregated up- and down- link bitrate) for the group may not exceed 100Mbit/sec, then if this threshold is breached, the CGCE will reject new grant requests. The CGCE will continue rejecting new grant requests as long as the average bit rate over the moving time window exceeds the set max bitrate.

The accuracy to what the bitrate in a time period can be determined can be engineered by setting the grant validity time and the time window for which the bit rate is determined. The required accuracy may depend on the operator requirements.

As another example, the case is considered wherein a maximum bitrate of 100 Mbits/sec should be enforced. Calculations to be performed are the determination of the grant data size for new grant requests and determination of the data volume for the group for an averaging time window. The average bit rate is obtained by dividing the volume over time and the group policy may then be enforced.

The CGCE determines the data volume for the group by summing over an averaging time window the determined grant data size for all grants issued for sessions belonging to the group. Sessions with high data rates will require multiple grants within the averaging time window.

The bitrate is determined by dividing the data volume for the group by the averaging time window (for example 60 seconds) over which the volume is summed. If the group policy states that the max bitrate (aggregated up- and down- link bitrate) for the group may not exceed 100Mbit/sec, then if this threshold is breached, the CGCE will reject new grant requests. The CGCE will continue rejecting new grant requests as long as the average bit rate over the moving time window exceeds the set max bitrate. Because sessions with higher bitrates require more grants, they are more likely to be impacted by a reduction in bitrate.

Instead of issuing individual instructions for member devices of the group G, group grants may be issued by the CGCE to the GGSNs (or P-GWs). Such group grants would reduce the amount of communication over the interface between the network nodes and the CGCE.

FIG. 6 is a time diagram illustrating the transmission of group grants from the CGCE to the GGSNs. Connections C-A of UE-A and C-B1 UE-B1, traversing, respectively, GGSN-A and GGSN-B are again assumed to already exist. A connection request R-B2 of UE-B2 to GGSN-B again triggers a control request CR-B2 and a determination of the group to which UE-B2 belongs, using database DB. Instead of issuing an instruction relating to individual device UE-B2, the CGCE issues a first instruction GI-A, comprising a first group grant, to GGSN-A and a second instruction GI-B, comprising a second group grant, to GGSN-B. The group processing GPROC is such that the aggregate of the first group grant and the second group grant fulfils (complies with) the connection value condition for the group G. In the example of FIG. 6, the second instruction GI-B, comprising the second group grant, may e.g. allow GGSN-B to establish not more than two connections and the first instruction GI-A, comprising the first group grant, may allow GGSN-A to establish not more than one connection. If the connection C-B1 of UE-B1 (and/or if the connection C-B2 of UE-B2) traversing GGSN-B would terminate and if GGSN-B would subsequently receive another connection request from a device belonging to the same group G, GGSN-B does not need to communicate again with the CGCE and may grant the another connection request. Similarly, if the connection C-A of UE-A traversing GGSN-A would terminate and if GGSN-A would subsequently receive another connection request from a device belonging to the same group G, GGSN-A does not need to communicate again with the CGCE and may grant the another connection request.

Again, there is a variety of ways in which GGSN-B may determine the group G of devices and the applicable condition. The CGCE may communicate the group identifier with the instructions to the GGSNs. A connection request or connection may then be related to the received group identifier. As an example, the processor uP of the GGSN may process an indication in the connection request or an indication associated with the connection of a device that the device (and thus its connection) belongs to a device group. If the indication is a group identifier, the group instruction GI-B may be applied if the group identifier corresponds with the group identifier received from the CGCE with the group instruction GI-B. If the indication is not a group identifier, the group identifier may be received on the basis of the indication (e.g. from the HLR/HSS or from another database) and the group instruction may be applied if the group identifier corresponds with the group identifier received from the CGCE with the group instruction GI-B.

A group identifier may also be received from a group repository, e.g. on the basis of a signalling mechanism involving the HLR/HSS, without a group related indication or identifier in the connection request or connection. Again, if the thus received group identifier corresponds with the group identifier received from the CGCE with the group instruction GI-B, group instruction GI-B may be applied, for example to request R-B2 and/or to any following request, until group instruction GI-B expires, is revoked, is revoked or is modified.

It is noted that the method has been described in terms of steps to be performed, but it is not to be construed that the steps described must be performed in the exact order described and/or one after another. One skilled in the art may envision to change the order of the steps and/or to perform steps in parallel to achieve equivalent technical results.

With some modifications, one skilled in the art may extend the embodiments described herein to other architectures, networks, or technologies.

Various embodiments of the invention may be implemented as a program product for use with a computer system or a processor, where the program(s) of the program product define functions of the embodiments (including the methods described herein). In one embodiment, the program(s) can be contained on a variety of non-transitory computer-readable storage media (generally referred to as "storage"), where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored.

It is to be understood that any feature described in relation to any one embodiment may be used alone, or in combination with other features described, and may also be used in combination with one or more features of any other of the embodiments, or any combination of any other of the embodiments. Moreover, the invention is not limited to the embodiments described above, which may be varied within the scope of the accompanying claims.

## Claims

1. A method for performing a group control function for a telecommunications network (1) for a group of devices (UE-A, UE-B1, UE-B2, UE-B3), the group control function being associated with at least one group connection value condition defined for the group of devices, wherein the at least one group connection value condition relates to at least one of: (i) the aggregate number of established connections for the group of devices; (ii) the aggregate of maximum data rate parameters for the group of devices; (iii) the aggregate of allocated data rates defined for the group of devices; and (iv) the aggregate of monitored data rates for the group of devices, the telecommunications network comprising at least a first network node (GGSN-A) and a separate second network node (GGSN-B), wherein the first network node and the second network node are connected to a common group control entity (CGCE) and wherein for one or more member devices of the group of devices a connection is established between the one or more member devices of the group of devices and the telecommunications network, which connection traverses either the first network node or the second network node, the method comprising the steps by the common group control entity of:
- obtaining connection value information relating to the connections of the one or more member devices of the group of devices (UE-A) traversing the first network node;
- obtaining further connection value information relating to a connection-associated event triggered by a member device of the group of devices, wherein the connection value information and the further connection value information represent values associated with the group connection value condition;
- determining whether an aggregate of the connection value information and the further connection value information fulfils the group connection value condition;
**characterised in that**:
- the connection value information also relates to the connections of the one or more member devices of the group of devices (UE-B1 - UE-B3) traversing the second network node;
- the connection-associated event is triggered at the first network node or the second network node; and
- further comprising transmitting a first instruction comprising a first group grant to the first network node and transmitting a second instruction comprising a second group grant to the second network node, wherein both the first group grant and the second group grant relate to the group of devices and wherein the aggregate of the first group grant and the second group grant fulfils the group connection value condition.

2. The method according to claim 1, wherein the further connection value information is obtained following at least one of:
(a) receiving a control request from the first network node or the second network node; and
(b) receiving control information from the first network node or the second network node.

3. The method according to claim 1 or 2, further comprising at least one of the steps of:
- instructing the first network node or the second network node to not grant a connection request from the member device when the group connection value condition is not fulfilled;
- instructing at least one of the first network node and the second network node to adapt a connection parameter of one or more of the connections of the member devices such that the group connection value condition is fulfilled;
- instructing the first network node or the second network node to grant a connection request from the member device with an adapted connection parameter such that the group connection value condition is fulfilled;
- instructing the first network node or the second network node to grant the connection request when the group connection value condition is fulfilled.

4. The method according to one or more of the preceding claims, further comprising the step of instructing the first network node or the second network node to grant a connection request to establish a further connection for a further member device, the instruction comprising at least one of a grant validity time for the further connection and a grant data size for the further connection.

5. The method according to one or more of the preceding claims, wherein the first network node is a first packet gateway and the second network node is a second packet gateway.

6. The method according to one or more of the preceding claims, wherein the connection value information and the further connection value information are obtained following receiving a control request from the first network node or the second network node, and wherein the control request is received over the Gx, Gy or S9 interface as defined in 3GPP.

7. The method according to one or more of the preceding claims, wherein at least one of the common group control entity and the first network node or second network node has access to a database with device identifiers, the method comprising the step of receiving information from the database by at least one of the common group control entity, the first network node and
the second network node, enabling determination that the further member device belongs to the group of devices.

8. The method according to claim 1, further comprising the step of transmitting the first instruction and the second instruction containing a group identifier associated with the group of devices.

9. The method according to claim 8, further comprising the steps of:
- receiving an indication that a further device is a device belonging to a device group;
- in response to receiving the indication, consulting a database with group identifiers and retrieving the group identifier associated with the group of devices.

10. A computer program product implemented on a computer-readable non-transitory storage medium, the computer program product configured for, when run on a computer, executing the method steps according to one or more of the claims 1-9.

11. A group control entity (CGCE) configured for performing a group control function for a telecommunications network (1) for a group of devices (UE-A, UE-B1, UE-B2, UE-B3), the group control function being associated with at least one group connection value condition defined for the group of devices, wherein the at least one group connection value condition relates to at least one of: (i) the aggregate number of established connections for the group of devices; (ii) the aggregate of maximum data rate parameters for the group of devices; (iii) the aggregate of allocated data rates defined for the group of devices; and (iv) the aggregate of monitored data rates for the group of devices., the group control entity being further configured for:
- being connected with at least a first network node (GGSN-A) and a second network node (GGSN-B), the first network node and the second network node being nodes traversed by connections, each of the connections being established between a member device of the group of devices and the telecommunications network;
- obtaining connection value information relating to the connections of the member devices of the group of devices (UE-A) traversing the first network node;
- obtaining further connection value information relating to a connection-associated event triggered by a member device of the group of devices, wherein the connection value information and the further connection value information represent values associated with the group connection value condition;
- determining whether an aggregate of the connection value information and the further connection value information fulfils the group connection value condition; and
- optionally, performing one or more of the steps of the methods of claims 2-9; **characterised in that**:
- the connection value information is also related to the connections of the member devices of the group of devices (UE-B1 - UE-B3) traversing the second network node;
- the connection-associated event is triggered at the first network node or the second network node; and
- transmitting a first instruction comprising a first group grant to the first network node and transmitting a second instruction comprising a second group grant to the second network node, wherein both the first group grant and the second group grant relate to the group of devices and wherein the aggregate of the first group grant and the second group grant fulfils the group connection value condition.

## Patentansprüche

1. Verfahren zum Durchführen einer Gruppensteuerungsfunktion für ein Telekommunikationsnetzwerk (1) für eine Gruppe von Vorrichtungen (UE-A, UE-B1, UE-B2, UE-B3), wobei die Gruppensteuerungsfunktion mit mindestens einer Gruppenverbindungswertbedingung, definiert für die Gruppe von Vorrichtungen, assoziiert ist, wobei die mindestens eine Gruppenverbindungswertbedingung zu mindestens einem von Folgendem in Beziehung steht: (i) die gesamte Anzahl von hergestellten Verbindungen für die Gruppe von Vorrichtungen; (ii) das Aggregat von Parametern maximaler Datenraten für die Gruppe von Vorrichtungen; (iii) das Aggregat von zugeteilten Datenraten, definiert für die Gruppe von Vorrichtungen; und (iv) das Aggregat von überwachten Datenraten für die Gruppe von Vorrichtungen, das Telekommunikationsnetzwerk umfassend mindestens einen ersten Netzwerkknoten (GGSN-A) und einen separaten zweiten Netzwerkknoten (GGSN-B), wobei der erste Netzwerkknoten und der zweite Netzwerkknoten mit einer gemeinsamen Gruppensteuerungsentität (CGCE) verbunden sind und wobei für eine oder mehrere Mitgliedsvorrichtungen der Gruppe von Vorrichtungen eine Verbindung zwischen der einen oder den mehreren Mitgliedsvorrichtungen der Gruppe von Vorrichtungen und dem Telekommunikationsnetzwerk hergestellt wird, wobei diese Verbindung entweder den ersten Netzwerkknoten oder den zweiten Netzwerkknoten durchläuft, das Verfahren umfassend die folgenden Schritte durch die gemeinsame Gruppensteuerungsentität:
- Erlangen von Verbindungswertinformationen bezüglich der Verbindungen der einen oder mehreren Mitgliedsvorrichtungen der Gruppe von Vorrichtungen (UE-A), die den ersten Netzwerkknoten durchlaufen;
- Erlangen weiterer Verbindungswertinformationen bezüglich eines verbindungsassoziierten Ereignisses, ausgelöst durch eine Mitgliedsvorrichtung der Gruppe von Vorrichtungen, wobei die Verbindungswertinformationen und die weiteren Verbindungswertinformationen Werte repräsentieren, die mit der Gruppenverbindungswertbedingung assoziiert sind;
- Bestimmen, ob ein Aggregat der Verbindungswertinformationen und der weiteren Verbindungswertinformationen die Gruppenverbindungswertbedingung erfüllt;
**dadurch gekennzeichnet, dass**:
- die Verbindungswertinformationen sich außerdem auf die Verbindungen der einen oder mehreren Mitgliedsvorrichtungen der Gruppe von Vorrichtungen (UE-B1 - UE-B3), die den zweiten Netzwerkknoten durchlaufen, beziehen;
- das verbindungsassoziierte Ereignis an dem ersten Netzwerkknoten oder dem zweiten Netzwerkknoten ausgelöst wird; und
- ferner umfassend Übertragen einer ersten Anweisung, umfassend eine erste Gruppenbewilligung, an den ersten Netzwerkknoten und Übertragen einer zweiten Anweisung, umfassend eine zweite Gruppenbewilligung, an den zweiten Netzwerkknoten, wobei sich sowohl die erste Gruppenbewilligung als auch die zweite Gruppenbewilligung auf die Gruppe von Vorrichtungen beziehen und wobei das Aggregat der ersten Gruppenbewilligung und der zweiten Gruppenbewilligung die Gruppenverbindungswertbedingung erfüllt.

2. Verfahren nach Anspruch 1, wobei die weiteren Verbindungswertinformationen im Anschluss an mindestens einem von Folgendem erlangt werden:
(a) Empfangen einer Steuerungsanforderung von dem ersten Netzwerkknoten oder dem zweiten Netzwerkknoten; und
(b) Empfangen von Steuerungsinformationen von dem ersten Netzwerkknoten oder dem zweiten Netzwerkknoten.

3. Verfahren nach Anspruch 1 oder 2, ferner umfassend mindestens einen der folgenden Schritte:
- Anweisen des ersten Netzwerkknotens oder des zweiten Netzwerkknotens, eine Verbindungsanforderung von der Mitgliedsvorrichtung nicht zu bewilligen, wenn die Gruppenverbindungswertbedingung nicht erfüllt wird;
- Anweisen mindestens eines des ersten Netzwerkknotens und des zweiten Netzwerkknotens, einen Verbindungsparameter einer oder mehrerer der Verbindungen der Mitgliedsvorrichtungen derart anzupassen, dass die Gruppenverbindungswertbedingung erfüllt wird;
- Anweisen des ersten Netzwerkknotens oder des zweiten Netzwerkknotens, eine Verbindungsanforderung von der Mitgliedsvorrichtung mit einem angepassten Verbindungsparameter derart zu bewilligen, dass die Gruppenverbindungswertbedingung erfüllt wird;
- Anweisen des ersten Netzwerkknotens oder des zweiten Netzwerkknotens, die Verbindungsanforderung zu bewilligen, wenn die Gruppenverbindungswertbedingung erfüllt wird.

4. Verfahren nach einem oder mehreren der vorstehenden Ansprüche, ferner umfassend den Schritt des Anweisens des ersten Netzwerkknotens oder des zweiten Netzwerkknotens, eine Verbindungsanforderung zum Herstellen einer weiteren Verbindung für eine weitere Mitgliedsvorrichtung zu bewilligen, die Anweisung umfassend mindestens eine einer Bewilligungsvalidierungszeit für die weitere Verbindung oder einer Bewilligungsdatengröße für die weitere Verbindung.

5. Verfahren nach einem oder mehreren der vorstehenden Ansprüche, wobei der erste Netzwerkknoten ein erstes Paketgateway ist und der zweite Netzwerkknoten ein zweites Paketgateway ist.

6. Verfahren nach einem oder mehreren der vorstehenden Ansprüche, wobei die Verbindungswertinformationen und die weiteren Verbindungswertinformationen im Anschluss an Empfangen einer Steuerungsanforderung von dem ersten Netzwerkknoten oder dem zweite Netzwerkknoten erlangt werden und wobei die Steuerungsanforderung über die Gx-, Gy- oder S9-Schnittstelle, wie in 3GPP definiert, empfangen wird.

7. Verfahren nach einem oder mehreren der vorstehenden Ansprüche, wobei mindestens eine/r der gemeinsamen Gruppensteuerungsentität und des ersten Netzwerkknotens oder zweiten Netzwerkknotens Zugang zu einer Datenbank mit Vorrichtungskennungen hat, das Verfahren umfassend den Schritt des Empfangens von Informationen von der Datenbank durch mindestens einer/eines der gemeinsamen Gruppensteuerungsentität, des ersten Netzwerkknotens und des zweiten Netzwerkknotens, die eine Bestimmung ermöglichen, dass die weitere Mitgliedsvorrichtung zu der Gruppe von Vorrichtungen gehört.

8. Verfahren nach Anspruch 1, ferner umfassend den Schritt des Übertragens der ersten Anweisung und der zweiten Anweisung, enthaltend eine Gruppenkennung, die mit der Gruppe von Vorrichtungen assoziiert ist.

9. Verfahren nach Anspruch 8, ferner umfassend die folgenden Schritte:
- Empfangen einer Angabe, dass eine weitere Vorrichtung eine Vorrichtung ist, die zu einer Vorrichtungsgruppe gehört;
- als Reaktion auf Empfangen der Angabe Konsultieren einer Datenbank mit Gruppenkennungen und Abrufen der mit der Gruppe von Vorrichtungen assoziierten Gruppenkennung.

10. Computerprogrammprodukt, implementiert in einem computerlesbaren, nicht vergänglichen Speichermedium, das Computerprogrammprodukt konfiguriert zum, wenn es auf einem Computer ausgeführt wird, Ausführen der Verfahrensschritte nach einem oder mehreren der Ansprüche 1-9.

11. Gruppensteuerungsentität (CGCE), konfiguriert zum Durchführen einer Gruppensteuerungsfunktion für ein Telekommunikationsnetzwerk (1) für eine Gruppe von Vorrichtungen (UE-A, UE-B1, UE-B2, UE-B3), wobei die Gruppensteuerungsfunktion mit mindestens einer Gruppenverbindungswertbedingung, definiert für die Gruppe von Vorrichtungen, assoziiert ist, wobei die mindestens eine Gruppenverbindungswertbedingung zu mindestens einem von Folgendem in Beziehung steht: (i) die gesamte Anzahl von hergestellten Verbindungen für die Gruppe von Vorrichtungen; (ii) das Aggregat von Parametern maximaler Datenraten für die Gruppe von Vorrichtungen; (iii) das Aggregat von zugeteilten Datenraten, definiert für die Gruppe von Vorrichtungen; und (iv) das Aggregat von überwachten Datenraten für die Gruppe von Vorrichtungen, wobei die Gruppensteuerungsentität ferner konfiguriert ist zum:
- Verbundenwerden mit mindestens einem ersten Netzwerkknoten (GGSN-A) und einem zweiten Netzwerkknoten (GGSN-B), wobei der erste Netzwerkknoten und der zweite Netzwerkknoten von Verbindungen durchlaufen werden, wobei jede der Verbindungen zwischen einer Mitgliedsvorrichtung der Gruppe von Vorrichtungen und dem Telekommunikationsnetzwerk hergestellt ist;
- Erlangen von Verbindungswertinformationen bezüglich der Verbindungen der Mitgliedsvorrichtungen der Gruppe von Vorrichtungen (UE-A), die den ersten Netzwerkknoten durchlaufen;
- Erlangen weiterer Verbindungswertinformationen bezüglich eines verbindungsassoziierten Ereignisses, ausgelöst durch eine Mitgliedsvorrichtung der Gruppe von Vorrichtungen, wobei die Verbindungswertinformationen und die weiteren Verbindungswertinformationen Werte repräsentieren, die mit der Gruppenverbindungswertbedingung assoziiert sind;
- Bestimmen, ob ein Aggregat der Verbindungswertinformationen und der weiteren Verbindungswertinformationen die Gruppenverbindungswertbedingung erfüllt; und
- wahlweise Durchführen eines oder mehrerer der Schritte der Ansprüche 2-9;
**dadurch gekennzeichnet, dass**:
- die Verbindungswertinformationen sich außerdem auf die Verbindungen der Mitgliedsvorrichtungen der Gruppe von Vorrichtungen (UE-B1 - UE-B3), die den zweiten Netzwerkknoten durchlaufen, beziehen;
- das verbindungsassoziierte Ereignis an dem ersten Netzwerkknoten oder dem zweiten Netzwerkknoten ausgelöst wird; und
- Übertragen einer ersten Anweisung, umfassend eine erste Gruppenbewilligung, an den ersten Netzwerkknoten und Übertragen einer zweiten Anweisung, umfassend eine zweite Gruppenbewilligung, an den zweiten Netzwerkknoten, wobei sich sowohl die erste Gruppenbewilligung als auch die zweite Gruppenbewilligung auf die Gruppe von Vorrichtungen beziehen und wobei das Aggregat der ersten Gruppenbewilligung und der zweiten Gruppenbewilligung die Gruppenverbindungswertbedingung erfüllt.

## Revendications

1. Procédé pour exécuter une fonction de commande de groupe pour un réseau de télécommunications (1) pour un groupe de dispositifs (UE-A, UE-B1, UE-B2, UE-B3), la fonction de commande de groupe étant associée à au moins une condition de valeur de connexion de groupe définie pour le groupe de dispositifs, dans lequel l'au moins une condition de valeur de connexion de groupe concerne au moins l'un des éléments suivants : (i) le nombre cumulé de connexions établies pour le groupe de dispositifs ; (ii) le cumul des paramètres de débit de données maximum pour le groupe de dispositifs ; (iii) le cumul des débits de données alloués définis pour le groupe de dispositifs ; et (iv) le cumul des débits de données surveillés pour le groupe de dispositifs, le réseau de télécommunications comprenant au moins un premier nœud de réseau (GGSN-A) et un second nœud de réseau séparé (GGSN-B), dans lequel le premier nœud de réseau et le second nœud de réseau sont connectés à une entité de commande de groupe commune (CGCE) et dans lequel, pour un ou plusieurs dispositifs membres du groupe de dispositifs, une connexion est établie entre les un ou plusieurs dispositifs membres du groupe de dispositifs et le réseau de télécommunications, laquelle connexion traverse soit le premier nœud de réseau, soit le second nœud de réseau, le procédé comprenant, par l'entité de commande de groupe commune les étapes consistant à:
- obtenir des informations de valeur de connexion relatives aux connexions des un ou plusieurs dispositifs membres du groupe de dispositifs (UE-A) traversant le premier nœud de réseau ;
- obtenir d'autres informations de valeur de connexion relatives à un événement associé à la connexion déclenché par un dispositif membre du groupe de dispositifs, dans lequel les informations de valeur de connexion et les autres informations de valeur de connexion représentent des valeurs associées à la condition de valeur de connexion de groupe ;
- déterminer si'un cumul des informations de valeur de connexion et des autres informations de valeur de connexion satisfait, ou non, la condition de valeur de connexion de groupe ;
**caractérisé en ce que** :
- les informations de valeur de connexion concernent également les connexions des un ou plusieurs dispositifs membres du groupe de dispositifs (UE-B1 - UE-B3) traversant le second nœud de réseau ;
- l'événement associé à la connexion est déclenché au niveau du premier nœud de réseau ou du second nœud de réseau ; et
- comprenant en outre la transmission d'une première instruction comprenant un premier octroi de groupe au premier nœud de réseau et la transmission d'une seconde instruction comprenant un second octroi de groupe au second nœud de réseau, dans lequel le premier octroi de groupe et le second octroi de groupe concernent tous les deux le groupe de dispositifs, et dans lequel le cumul du premier octroi de groupe et du second octroi de groupe satisfait la condition de valeur de connexion de groupe.

2. Procédé selon la revendication 1, dans lequel les autres informations de valeur de connexion sont obtenues après au moins un des éléments suivants :
(a) la réception d'une demande de commande du premier nœud de réseau ou du second nœud de réseau ; et
(b) la réception d'informations de commande du premier nœud de réseau ou du second nœud de réseau.

3. Procédé selon la revendication 1 ou 2, comprenant en outre au moins l'une des étapes consistant à :
- donner pour instruction au premier nœud de réseau ou au second nœud de réseau de ne pas accéder à une demande de connexion du dispositif membre lorsque la condition de valeur de connexion de groupe n'est pas satisfaite ;
- donner pour instruction à au moins un du premier nœud de réseau et du second nœud de réseau d'adapter un paramètre de connexion d'une ou plusieurs des connexions des dispositifs membres de manière à ce que la condition de valeur de connexion de groupe soit satisfaite ;
- donner pour instruction au premier nœud de réseau ou au second nœud de réseau d'accéder à une demande de connexion du dispositif membre avec un paramètre de connexion adapté de manière à ce que la condition de valeur de connexion de groupe soit satisfaite ;
- donner pour instruction au premier nœud de réseau ou au second nœud de réseau d'accedér à la demande de connexion lorsque la condition de valeur de connexion de groupe est satisfaite.

4. Procédé selon une ou plusieurs des revendications précédentes, comprenant en outre l'étape consistant à donner pour instruction au premier nœud de réseau ou au second nœud de réseau d'accedér à une demande de connexion pour établir une autre connexion pour un autre dispositif membre, l'instruction comprenant un temps de validité d'octroi pour l'autre connexion et/ou une taille de données d'octroi pour l'autre connexion.

5. Procédé selon une ou plusieurs des revendications précédentes, dans lequel le premier nœud de réseau est une première passerelle de paquets et le second nœud de réseau est une seconde passerelle de paquets.

6. Procédé selon une ou plusieurs des revendications précédentes, dans lequel les informations de valeur de connexion et les autres informations de valeur de connexion sont obtenues après la réception d'une demande de commande du premier nœud de réseau ou du second nœud de réseau, et dans lequel la demande de commande est reçue sur l'interface Gx, Gy ou S9 telle que définie dans le projet 3GPP.

7. Procédé selon une ou plusieurs des revendications précédentes, dans lequel au moins l'un de l'entité de commande de groupe commune et du premier nœud de réseau ou du second nœud de réseau a accès à une base de données avec des identificateurs de dispositif, le procédé comprenant l'étape consistant à recevoir des informations de la base de données par au moins l'un de l'entité de commande de groupe commune, du premier nœud de réseau et du second nœud de réseau, permettant la détermination du fait que l'autre dispositif membre appartient au groupe de dispositifs.

8. Procédé selon la revendication 1, comprenant en outre l'étape consistant à transmettre la première instruction et la seconde instruction contenant un identificateur de groupe associé au groupe de dispositifs.

9. Procédé selon la revendication 8, comprenant en outre les étapes consistant à :
- recevoir une indication qu'un autre dispositif est un dispositif appartenant à un groupe de dispositifs ;
- en réponse à la réception de l'indication, consulter une base de données avec des identificateurs de groupes et récupérer l'identificateur de groupe associé au groupe de dispositifs.

10. Produit programme informatique mis en œuvre sur un support de stockage non transitoire lisible par ordinateur, le produit programme informatique étant configuré pour, lorsqu'il est exécuté sur un ordinateur, exécuter les étapes de procédé selon une ou plusieurs des revendications 1 à 9.

11. Entité de commande de groupe (CGCE) configurée pour exécuter une fonction de commande de groupe pour un réseau de télécommunications (1) pour un groupe de dispositifs (UE-A, UE-B1, UE-B2, UE-B3), la fonction de commande de groupe étant associée à au moins une condition de valeur de connexion de groupe définie pour le groupe de dispositifs, où l'au moins une condition de valeur de connexion de groupe concerne au moins l'un des éléments suivants : (i) le nombre cumulé de connexions établies pour le groupe de dispositifs ; (ii) le cumul des paramètres de débit de données maximum pour le groupe de dispositifs ; (iii) le cumul des débits de données alloués définis pour le groupe de dispositifs ; et (iv) le cumul des débits de données surveillés pour le groupe de dispositifs, l'entité de commande de groupe étant en outre configurée pour :
- être connectée à au moins un premier nœud de réseau (GGSN-A) et un second nœud de réseau (GGSN-B), le premier nœud de réseau et le second nœud de réseau étant des nœuds traversés par des connexions, chacune des connexions étant établie entre un dispositif membre du groupe de dispositifs et le réseau de télécommunications ;
- obtenir des informations de valeur de connexion relatives aux connexions des dispositifs membres du groupe de dispositifs (UE-A) traversant le premier nœud de réseau ;
- obtenir d'autres informations de valeur de connexion relatives à un événement associé à la connexion déclenché par un dispositif membre du groupe de dispositifs, où les informations de valeur de connexion et les autres informations de valeur de connexion représentent des valeurs associées à la condition de valeur de connexion de groupe ;
- déterminer si un cumul des informations de valeur de connexion et des autres informations de valeur de connexion satisfait, ou non, la condition de valeur de connexion de groupe ; et
- éventuellement, effectuer une ou plusieurs des étapes des procédés des revendications 2 à 9 ;
**caractérisée en ce que** :
- les informations de valeur de connexion concernent également les connexions des dispositifs membres du groupe de dispositifs (UE-B1 - UE-B3) traversant le second nœud de réseau ;
- l'événement associé à la connexion est déclenché au niveau du premier nœud de réseau ou du second nœud de réseau ; et
- la transmission d'une première instruction comprend un premier octroi de groupe au premier nœud de réseau et la transmission d'une seconde instruction comprend un second octroi de groupe au second nœud de réseau, où le premier octroi de groupe et le second octroi de groupe concernent tous les deux le groupe de dispositifs, et où le cumul du premier octroi de groupe et du second octroi de groupe satisfait la condition de valeur de connexion de groupe.
